# EUROPEAN PATENT APPLICATION

(11) **EP 1 892 617 A2**
(43) Date of publication of application: **27.02.2008**
(21) Application number: 07253066.0
(22) Date of filing: 03.08.2007
(51) Int. Cl.: G06F 3/12

(54) **Host printing system, apparatus and method**

(30) Priority: 03.08.2006 US 499050
(71) Applicant: Ricoh Company, Ltd., Tokyo 143-8555 (JP)
(72) Inventor: Hanaoka, Nobutaka, c/o Ricoh Americas Corporation, West Caldwell, New Jersey 07006 (US); Watanabe, Atsushi, c/o Ricoh Canada Inc., Toronto, M2P 2B5 Ontario (CA)
(74) Representative: Mounteney, Simon James

(57) **Abstract**

Techniques for tracking printer usage are provided. For example, a host print page count of pages printed by a printer device is maintained for each of a plurality of host terminals based on print jobs from the host terminal over a predetermined period of time. When a print job communication from a sending host terminal is received, network address information in the print job communication from the sending host terminal is utilized to retrieve the host print page count maintained for print jobs from the sending host terminal over the predetermined period of time.

## Description

### TECHNICAL FIELD

This application relates to tracking and controlling host printing. In particular, the application relates to maintaining counts of pages printed by each host terminals.

### BACKGROUND

In the current information age, there are often discussions of the desirableness of a paperless society. However, notwithstanding such discussions, there remains a great need by users of computers and other host terminals for printing functionality. Therefore, devices having printing or plotting functionality, such as printers, copiers, multi-function devices, etc., continue to play a significant role in information technology (IT) at home and at work. The terms "printer" and "printer device" are used hereinafter generically to include any output device having a printing or plotting functionality, and includes multi-function devices having a copy and/or scanning functionality in addition to the printing or plotting functionality.

There are many reasons for tracking the number of pages printed on a printer. For example, printer usage information can be valuable to the manufacturer of the printer in order to design new printers (or modify existing printer designs) that meet with users' needs. Also, printer usage information can be valuable to the vendor of the printer to allow the vendor to assess the printing needs of the customer. Further, many enterprises (for example, companies or other commercial or business entities, or another organization, such as a governmental agency, other public or private organizations, etc.) track their IT expenditures and assess return on investment. In addition, a contract for maintenance of printers is often dependent upon an accurate measurement of usage of the printer covered by the contract. Further, equipment leases for printers often base charges upon quantities of media that are output.

Many approaches have been taken to track printer usage. In one approach, a printer is provided with a counter which generally counts media sheets supplied by a media bin. Such an approach can be adequate if the objective is to measure the total number of sheets used by the printer. However, such an approach does not allow for monitoring of printing by specific user or host terminal.

In another approach, a usage-monitoring software tool is installed on each terminal to be monitored. The usage-monitoring tool activates a special print usage-monitoring driver which updates a log file on the terminal with print usage information. Such an approach has several disadvantages. For example, it unnecessarily occupies resources on the terminal during the printing process. Further, separate software has to be installed on each terminal. In addition, there may be substantial privacy concerns, which may or may not be addressed by obtaining consent from the user (to perform the usage tracking). Further, separate files are maintained for different users, and if a user uses multiple terminals then multiple files will be distributed on the multiple terminals. Therefore, compilation of print usage information can be rather difficult.

Another approach proposes maintaining a log of print jobs performed by a printer, and storing the log file in the printer. The log includes for each print job, information identifying the user and/or application which sent the print job and various information regarding the print job such as the number of pages in the print job. However, in order to extract useful usage information the log file must be parsed and analyzed which requires significant time and resources.

There is a need for better techniques for tracking printer usage.

### SUMMARY

A number of techniques are described in this patent specification for maintaining page count in host printing.

In one example, a host print page count of pages printed by a printer device is maintained for each of a plurality of host terminals based on print jobs from the host terminal over a predetermined period of time. When a print job communication from a sending host terminal is received, network address information in the print job communication from the sending host terminal is utilized to retrieve the host print page count maintained for print jobs from the sending host terminal over the predetermined period of time.

Examples of a host printing apparatus, a host printing system and a method for host printing on a network printer are described.

### BRIEF DESCRIPTION OF THE DRAWINGS

The features of the present application can be more readily understood from the following detailed description with reference to the accompanying drawings wherein:
Fig. 1 shows a schematic diagram of a host printing system, according to an example of the present disclosure;
Fig. 2 shows a schematic diagram of a host printing system, according to another example;
Figs. 3A and 3B shows a flow chart of a workflow in the system of Fig. 1 or Fig. 2;
Fig. 4 shows a block diagram of a host terminal;
Fig. 5 shows a schematic diagram of a host printing apparatus, according to an example of the present disclosure;
Fig. 6 shows a tabular representation of a function map, according to an example of the present disclosure;
Fig. 7 shows a schematic diagram of a host count filter, according to an example of the present disclosure;
Fig. 8 shows a graphical representation of a count table, according to an example of the present disclosure;
Fig. 9 shows a schematic diagram of a host printing system, according to another example of the present disclosure; and
Fig. 10 shows a flow chart of a method for host printing over a network, according to an example of the present application.

### DETAILED DESCRIPTION

In describing preferred or exemplary embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner.

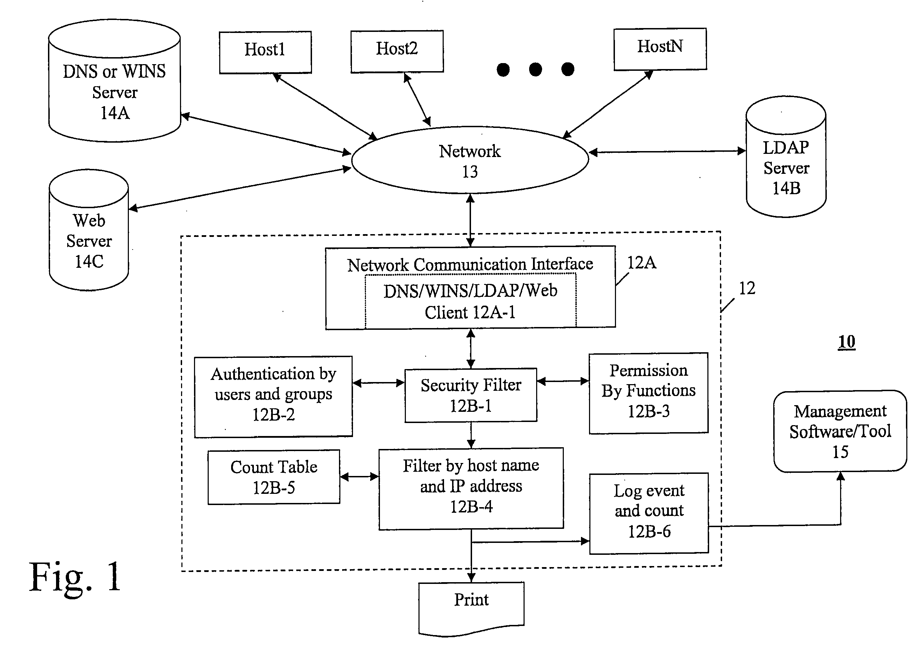

An overview of a host printing system, according to some preferred embodiments of this disclosure, will be described with reference to Figs. 1-3b.

In host printing system 10 of Fig. 1, printer device 12 is preferably accessible by a plurality of host terminals (Host1, Host2, .. HostN, with N being an integer) through a network connection 13 (such as via the Internet, an intranet, another network, or a combination thereof).

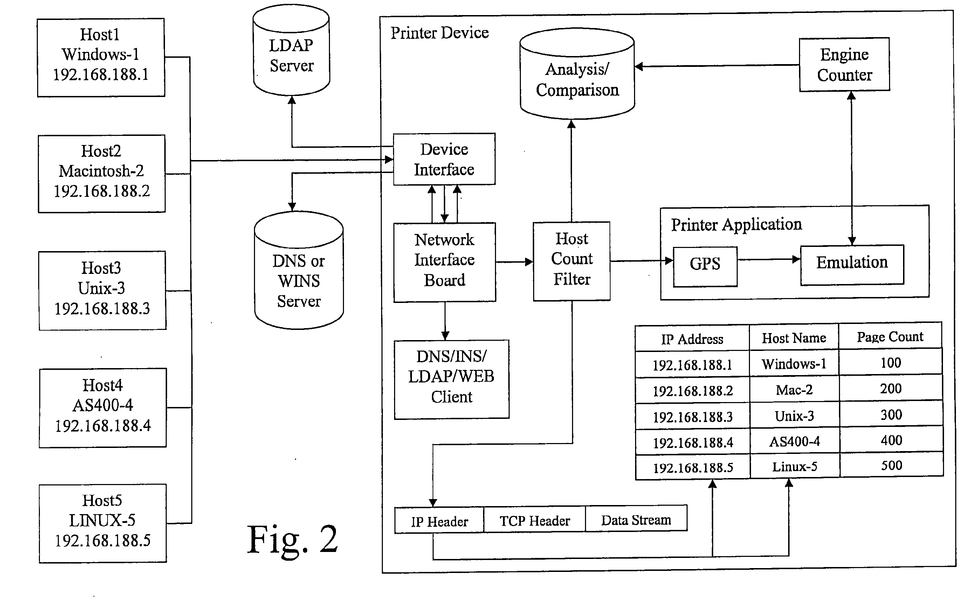

Each host terminal has an assigned network address (for example, IP address, MAC address, etc.), and the network address is mapped to a host name associated with the host terminal. In the example shown in Fig. 2, the network address and host name of each terminal are as follows: for Host1, 192.168.188.1 and Windows-1, respectively; for Host2, 192.168.188.2 and Macintosh-2; for Host3, 192.168.188.3 and Unix-3; for Host4, 192.168.188.4 and AS400-4; and for Host5, 192.168.188.5 and Linux-5.

The mapping of network address to host name in the example of Fig. 1 is maintained by a DNS or WINS server 14A. DNS (Domain Name System) is a group of protocols and services, including name registration and name-to-address resolution capabilities, which can be used over the Internet and TCP/IP-based networks.

Similarly, WINS (Windows Internet Name Service) provides for mapping of network address to device name for each registered device. In addition, the network address and/or host name may additionally be associated with a user code, group (or departmental) code, etc. Users can specify a user-friendly device name (for example, "TargetDevice") to identify a particular device, in place of specifying a long, numeric network address (for example, "111.222.333.4") assigned to the device. In the example of Fig. 1, the host printing apparatus 12 may be configured through a DNS or WINS client to request a corresponding server to provide name resolution service. For example, the DNS client may request that the DNS server convert a host name to a corresponding network address (or vice versa).

In addition, the system 10 includes a LDAP server 14B which provides security services. More specifically, the LDAP server maintains data regarding access and printing rights (further discussed *infra*)*.* For example, a host terminal may be allowed to utilize a correspond set of printing (and other features) features, as indicated by the data maintained by the LDAP server. The control of access may be determined based on, for example, host name, user name, group (or department) name, device name, etc.

The host printing apparatus 12 includes a network communication interface 12A, and may be integrated in a single integral printer device or may be a front end coupled to the printer device. The network communication interface 12A can include a combination of hardware and software. For example, the network interface can include a network interface board and/or other hardware components (not shown). In addition, the network interface may be configured through software as a client to various services (such as provided by a DNS or WINS server, a LDAP server, a Web server, etc.).

In the example of Fig. 2, the printer device is configured with a device interface and a network interface board for network communication. The network interface board includes CPU and memory to enable the printer device to be configured as a DNS or WINS client, an LDAP client, a Web client, etc. For example, the printer device as a Web client can obtain the benefit of various Web services (such as from a print server, application server, software updates, etc.).

In addition, the printer device has a host count filter which provides the printer device with several novel and unobvious features.

When receiving a print job, through the network interface, the filter (12B-1) performs authentication by user and group (12B-2), and determines whether there is permission to invoke the requested print function (12B-3). The host count filter extracts the network address from (for example, a header of) the print job communication, requests name resolution through the DNS or WINS client (12A-1), and performs authentication and permission determination through the LDAP client (12A-1) . Once authentication and permission are verified, the host count filter forwards the print job to the printer application, monitors the print job to determine a software page count for the job, and utilizes the host name and/or network address information (12B-4) to update page count information in a count table (12B-5), and log event and count (12B-6) which can then be sent to one or more management software or tools 15 (such as for management and maintenance of the printer, total cost of ownership analysis, accounting and charging for the print job, etc.). The host count filter maintains a count table (12B-5) in which for each of the host terminals, a corresponding host print page count of pages printed by the printer device based on print jobs from the host terminal over a predetermined period of time (for example, since the last page count reset, since the beginning of the accounting period, etc.), as shown exemplarily in Fig. 2. When a print job communication is received from a sending host terminal, network address information is extracted from the print job communication received from the sending host terminal (and the network address identifies the host terminal from which the print job was received), and the host count filter monitors the print job to determine a count of the number of pages printed for the print job. The host count filter utilizes the network address information of the sending host terminal to retrieve the appropriate host print page count of pages printed by the sending host terminal over the predetermined period of time, and after the print job is completed, updates the host print page count with a print job page count (that is, number of pages printed by the printer device for the print job) . Thus, the count table is updated according to network address information, as print jobs are completed.

When the printer application receives the processed print job, the print job is converted by a generic printing system (GPS) to a print image and then forwarded to emulation which further processes the print image as necessary for the print engine. During printing, the print engine preferably also maintains a (hardware) count of pages printed. In the preferred embodiment, the software count and hardware count are compared to determine more accurately (and reliably) the number of pages printed based on the print job from the sending host terminal. The redundancy (provided by the software count and hardware count) alleviates the effects of a fault or failure by one of the counters.

The host count filter may include one or more computer programs stored on a computer readable medium and/or transmitted via a computer network or other transmission medium.

Additional host count filter features are discussed *infra.*

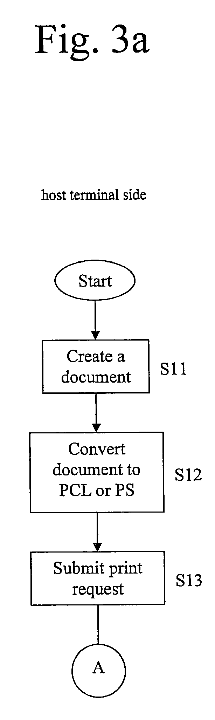

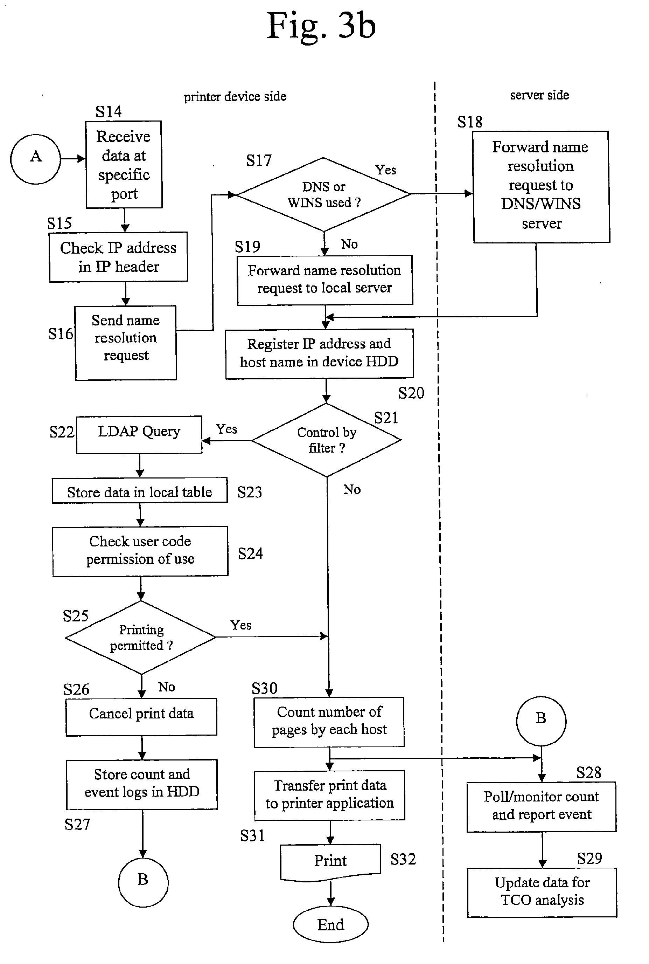

A typical workflow, in the host printing system shown in Figs. 1 and 2, will now be discussed with reference to Figs. 3A and 3B. Initially, a document is created or obtained by the host terminal (step S11) . When the user invokes a print function (such as within a word processor or other application), the document is converted to a format (such as PCL or PS) which can be processed by the printer device (step S12) and then a print request, bearing the network address of the host terminal, is submitted from the host terminal (step S13).

The print job communication is received at the printer side (step S14), and then the network address is extracted from the print job communication (step S15). A name resolution request is sent with the network address (step S16). If DNS or WINS is used (step S17, Yes), the name resolution request is forwarded to the DNS or WINS server (step S18). Neither DNS nor WINS is used (step S17, No), the name resolution request is forwarded to a local server (step S19). In either instance, the host name returned by the server is registered along with the network address in the printer device (step S20).

Next, the printer device checks whether control by the host count filter is to be applied (step S21). If the filter is to be applied (step S21, Yes), a query is submitted to the LDAP server (step S22), the data returned by the LDAP server is stored in a local table (step S23), and the stored data is utilized to check permission of use (by user and group, application, features, etc.) (step S24). If printing is not permitted (step S25, No), the print job is canceled (step S26), the cancellation is logged in the event log (step S27), and the count and event are reported to the server side (step S28) and data for TCO analysis is updated (step S29).

If the host count filter is not to be applied (step S21, No) or the permission check indicates that printing is permitted (step S25, Yes), the number of pages in the print job is counted (step S30), the print job data is forwarded to the printer application (step S31) and then printed (step S32), and the count and event are reported to the server side (step S28) and data for TCO analysis is updated (step S29).

The term "host terminal" used herein includes any of the various devices which have a need to print on demand, such as personal computers, laptop or notebook computers, workstations, other types of computers, PDAs, other information appliances, etc. The host terminal may be configured with any of the various platforms, such as Windows, Macintosh, Unix (and Unix variants), Linux, AS400, etc.

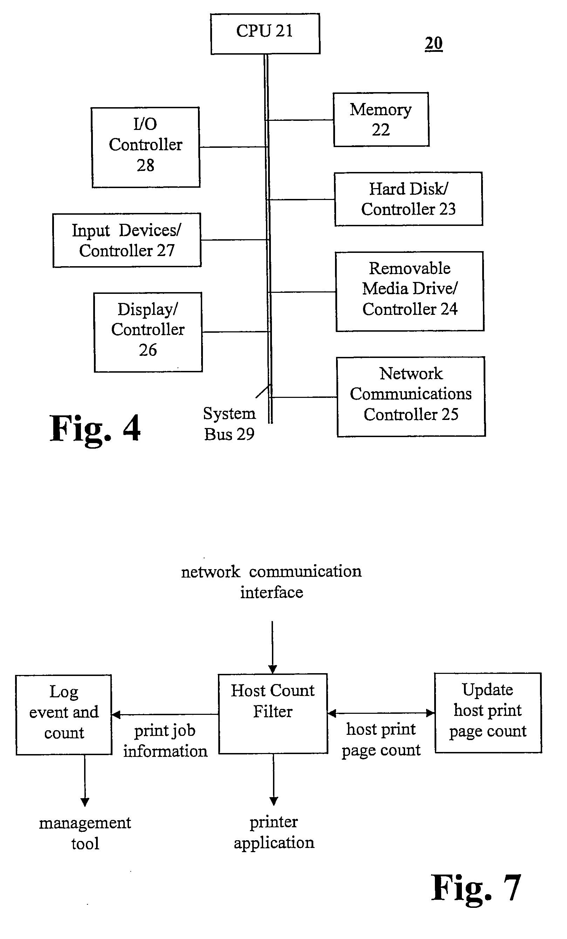

An exemplary configuration of a host terminal is shown in Fig. 4. Host terminal 20 includes CPU 21, memory 22, hard disk (and controller) 23, network communications controller 25 (for communications through a wired or wireless network), display (and controller) 26, one or more input devices (and controller) 27, I/O controller and optional removable media drive (and controller) 24, all of which are connected through system bus 29.

The host terminal may be configured (such as through a print driver or application) to have a plurality of print modes, such as PDL mode, image mode, etc. In the PDL mode, the sending host terminal communicates a print job to the printer device by utilizing a page description language (PDL) (for example, PostScript, etc.) and including one or more commands (for example, PCL, PJL, etc.), in a format which can be processed by the printer device. In the image mode, the host terminal converts the print job into bitmap data and transmits the bitmap data to the printer device. In any event, the print job is communicated from the host terminal via one or more packets through the network. Each packet includes in its header the network address (for example, IP address, Mac address, etc.) of the sending host terminal.

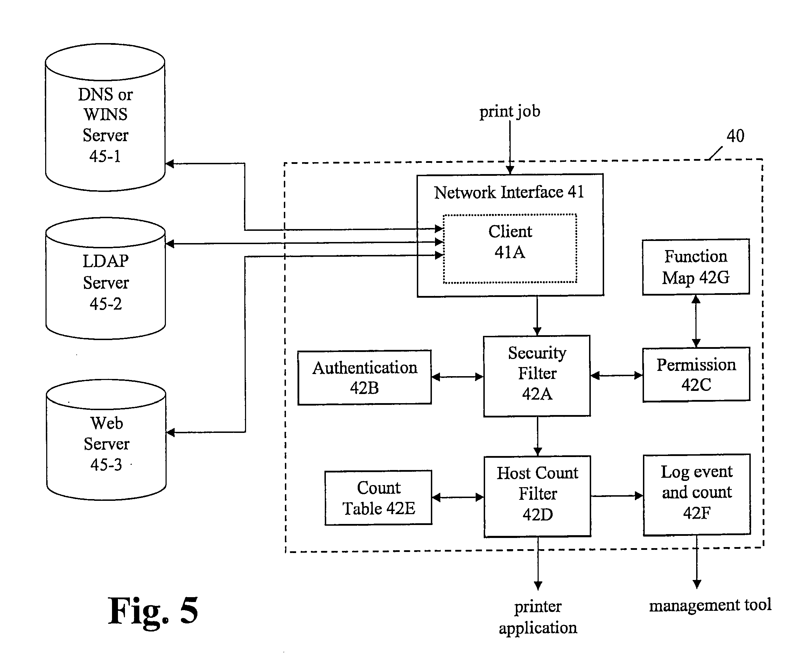

Another example of a host printing apparatus which authenticates a print job and checks for print permission is shown in Fig. 5. Host printing apparatus 40 includes a network interface 41, and in addition a security filter 42A, authentication block 42B, permission block 42C, host count filter 42D, count table 42E, log block 42F and function map 42G.

When the network interface 41 receives a print job communication from a sending host terminal, the network interface extracts network address information from the print job communication, and the network interface 41 through client 41A utilizes the network address information extracted from the print job communication to retrieve corresponding information such as host name, user information, group information, etc., from DNS or WINS server 45-1. The print job communication, the network address and the retrieved information are passed to security filter 42A. The security filter 42A passes the received information (for example, user information, group information, and/or network address) to authentication 42B to authenticate access to the printer device. In addition, the user may have been prompted (for example, by a print or other application) for a password when the print job was submitted, and the password information may be included in the print job communication and used for authentication. Authentication may be by user and/or by group.

If the user or host is authenticated, the host information, user information and/or group information are used by permission block 42C to determine whether the print job can proceed. The permission block 42C is guided by control parameters stored in function map 42G which can be populated with data retrieved from the LDAP server 45-2. A query can be submitted to the LDAP server 45-2, as needed or periodically.

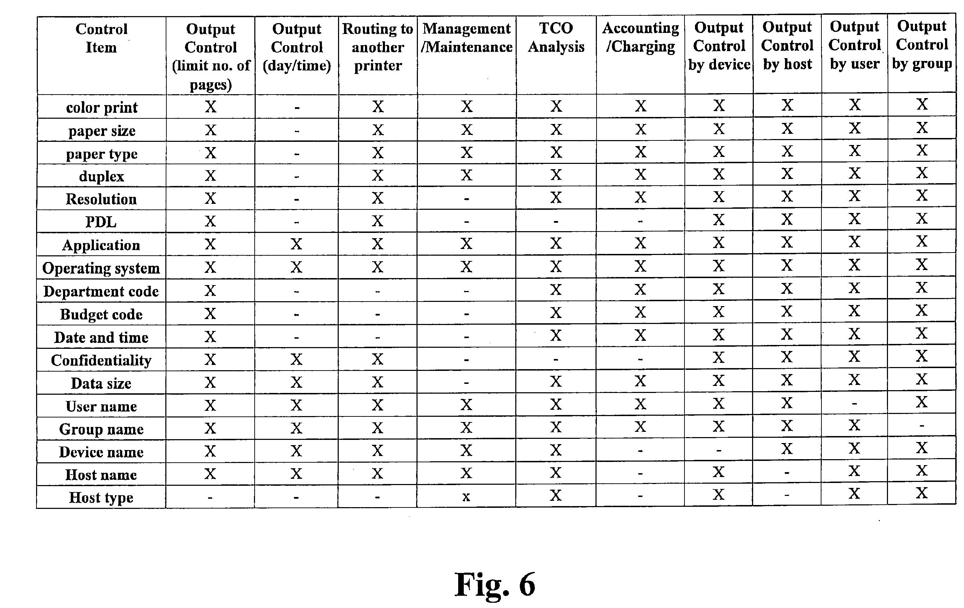

An example of a function map is shown in Fig. 6. In the function map of Fig. 6, control parameters include input items (for example, specific host, user, printer), output items and control items. The control items can be used individually or in combination. Output items in the function map of Fig. 6 include printing control according to number of pages (that is, page count), printing control according to day and time, rerouting of print job to another printer, management and maintenance of the printer (and/or printing system), TCO (total cost of ownership) analysis, and accounting and charging for the print job.

Several control items are shown in the function map of Fig. 6, including color printing, paper size, paper type, duplex printing, print resolution, PDL, application, host type, departmental code, budget code, date and time, confidentiality, data size and user name. Print jobs submitted by Host A can be controlled according to each of the control items. Similarly, print jobs submitted by members of Group I can be controlled according to each of the control items. On the other hand, utilizing the function map of Fig. 6, print jobs submitted to Printer 1 can be controlled according to each of the control items, except for department code and budget code.

The control items can be used for control of printer output. For example, print jobs may be controlled according to page count, and a print job submitted by Host A can be rejected if the job, when added to the host print page count maintained by the host count filter for pages printed by hosts of the same host type as Host A, places the total print page count for the host type above the allowed number of printed pages for the current accounting period. As another example, print jobs may be controlled according to day and time, and a print job submitted by members of Group I during the middle of a workday can be deferred to another time (for example, early morning) or another day (for example, over the weekend), like a batch job, if the job is generated by a graphics application which consumes an inordinate amount of printing resources. As a third example, print jobs may be rerouted to another printer, and a print job including high-resolution images or designated "confidential" and submitted to Printer 1 (which may be unsuitable for printing high-resolution images or confidential jobs) can be routed to a printer suitable for printing the job (and a message, such as e-mail, identifying the printer to which the job is rerouted can be sent to the sending host).

The control items may also be used to control output of host or job page count information to external applications. Output of page count information to management/maintenance tools may be controlled according to duplex printing (or color printing, paper size, paper type) in the example of Fig. 6. Similarly, output of page count information for accounting and charging may be controlled according to department code or budget code (or color printing, paper size, paper type, duplex printing, print resolution, date and time of printing, data size) in the example of Fig. 6. Further, output of page count information for total cost of ownership (TCO) analysis may be controlled according to print resolution (or color printing, paper size, paper type, duplex printing, date and time of printing, data size) in the example of Fig. 6.

It should be understood that Fig. 6 shows an example of a function map and that the function map can include additional control parameters. For example, a virtually unlimited number of input items (for example, specific hosts or groups) can be added, depending on the storage area allocated to the function map. Further additional control items (such as file format) and output items can be added.

In addition, the function map can have a different configuration of control parameter settings. For example, the function map may be modified to allow output of page count information for TCO analysis to be controlled according to department code or budget code. The function map can preferably be changed by a user with administrator rights, and a user interface may be provided for reconfiguring the function map, as desired.

Further, the function map is shown in Fig. 6 notionally as a table. However, the function map can be stored multi-dimensionally (that is, more than two dimensions). For example, one dimension may be indexed by the input items, another dimension by the control items, and a third dimension by the output items. As another example, as mentioned above a combination of control items can be used, and the control items may be split into two or more groups with each group constituting a distinct dimension.

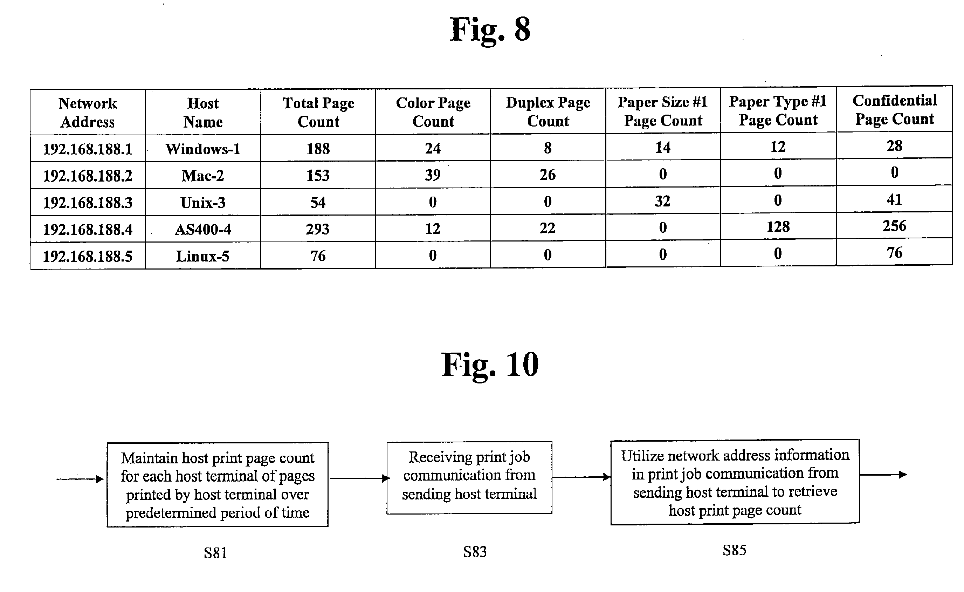

In the host printing apparatus of Fig. 5, if the permission block 42C guided by the control parameters in function map 42G determines that the print job can proceed, the job is forwarded through the host count filter 42D to a printer application. While the job is printed, the host count filter 42D monitors the job page count. The host count filter, like in other examples discussed supra, maintains for each host terminal a corresponding host print page count. An exemplary work flow of the host count filter is shown in Fig. 7. In the example of Fig. 5, the collection of host print page counts is maintained in a count table 42E.

An example of a count table is shown in Fig. 8. The page counts maintained in the count table of Fig. 8 for a host terminal can be accessed by matching network address or host name of the host terminal. In the example of Fig. 8, the host name assigned to a host terminal is a concatenation of the host type of the terminal with a unique terminal number as a suffix. Thus, each host name is unique to the corresponding terminal. Other techniques can alternatively be used for assigning host names, so long as each host name is unique to the terminal to which it is assigned.

In the example of Fig. 8, a host total page count and a number of other host page counts (such as host color print page count, host duplex print page count, host paper size #1 print page count, host paper type #1 print page count, confidential print page count) are maintained in the count table for each host terminal. Although not shown, other page counts (such as application #1 print page count, high-resolution print page count, etc.) may also be maintained in the count table.

Returning to the host printing apparatus of Fig. 5, upon completion of the print job, the host count filter 42D utilizes the job page count to update the count table 42E, including appropriate host page count maintained in the count table for the sending host terminal. In addition, information regarding the completed print job (including job page count) is forwarded to log event and count block 42F which in turn updates a log of processed print jobs and/or sends completed job information to an external management tool which maintains a processed job log.

For example, the management tool (as well as other services) may be provided by Web server 45-3.

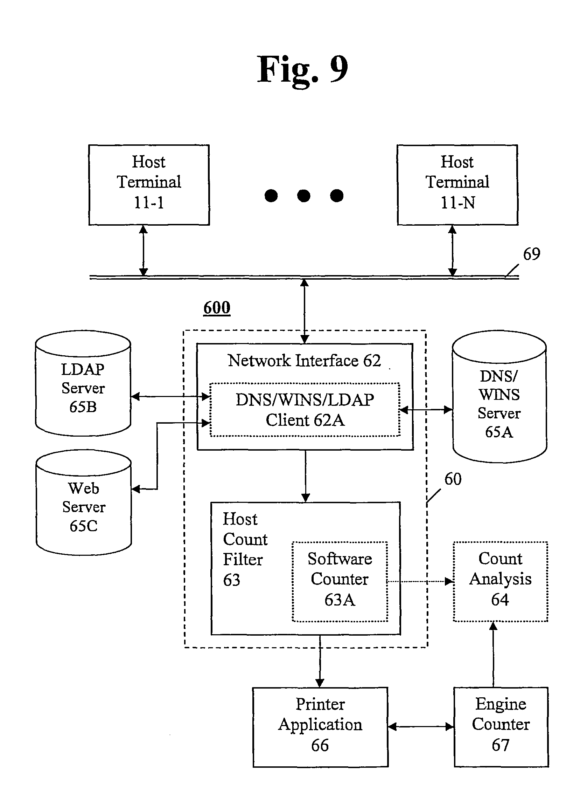

Fig. 9 shows another example of a host printing system. System 600 includes host terminals 11-1 through 11-N, host printing apparatus 60 coupled to the host terminals through network 69, DNS/WINS server 65A, LDAP server 65B and Web server 65C, printer application 66, engine counter 67 and a count analysis block 64.

The host printing apparatus 60 can be similar to the apparatus 12 in Fig. 1 and the apparatus 40 in Fig. 5, and includes a network interface 62 and a host count filter 63. The host count filter 63 can be one of the host count filters discussed supra and including in addition software counter 63A. The host count filter and the print engine each monitor printing of a print job by the print engine, and keep, via the software counter 63A and the engine counter 67, respectively, counts of the pages of the print job printed by the printer device. Upon completion of the print job, the count analysis block 64 compares and analyzes the software count and hardware count to determine the number of pages printed based on the print job.

An example (Fig. 10) of a method for host printing on a printer device which can be implemented with any of the host printing apparatuses comprises (a) maintaining for each of a plurality of host terminals a print page count of pages printed by the network printer based on print jobs from the host terminal over a predetermined period of time (step S81), (b) receiving a print job communication from a sending host terminal (step S83), and (c) utilizing network address information in the print job communication from said sending host terminal to retrieve said print page count maintained for print jobs from the sending host terminal over said predetermined period of time (step S85).

The above specific embodiments are illustrative, and many variations can be introduced on these embodiments without departing from the spirit of the disclosure or from the scope of the appended claims. For example, elements and/or features of different illustrative embodiments may be combined with each other and/or substituted for each other within the scope of this disclosure and appended claims.

## Claims

1. A host printing apparatus (12) including a network communication interface (12A) configured for communications with a plurality of host terminals through a network (13), including receiving a print job communication from a sending host terminal and extracting network address information of said sending host terminal from said print job communication, the host printing apparatus being **characterized by** comprising:
a host count filter configured to maintain for each of the plurality of host terminals a host print page count of pages printed by a printer device based on print jobs from the host terminal over a predetermined period of time, and utilize the network address information extracted from said print job communication from said sending host terminal to retrieve the host print page count of pages printed by the sending host terminal over said predetermined period of time.

2. A host printing apparatus according to claim 1, wherein said
host count filter utilizes the host print page count in combination with one or more control parameters to control printing of the print job from the sending host terminal.

3. A host printing apparatus according to claim 2, wherein said
one or more control parameters includes job confidentiality designation.

4. A host printing apparatus according to claim 2, wherein said
one or more control parameters includes host type.

5. A host printing apparatus according to claim 2, further
comprising a user interface for specifying or changing said one or more control parameters.

6. A host printing apparatus according to claim 2, wherein said
host count filter utilizes said network address information extracted from said print job communication from said sending host terminal to determine the corresponding host name of the sending host terminal, and determines said one or more control parameters utilizing the host name of the sending host terminal.

7. A host printing apparatus according to claim 2, wherein said
host count filter utilizes said network address information extracted from said print job communication from said sending host terminal to determine the corresponding group of the sending host terminal, and determines said one or more control parameters utilizing the group information of the sending host terminal.

8. A host printing apparatus according to claim 2, wherein said
host count filter determines said one or more control parameters utilizing printer information corresponding to the printer device.

9. A host printing apparatus according to claim 1, wherein said
host count filter utilizes one or more control parameters to control output of at least one of the host print page count and completed print job information to an external application.

10. A host printing apparatus according to claim 1, wherein said
host count filter utilizes the retrieved host print page count to determine whether or when the print job from said sending host terminal is to be performed by said printer device.

11. A host printing apparatus according to claim 1, wherein said
host count filter utilizes the retrieved host print page count to determine whether the print job from said sending host terminal is to be routed to another printer.

12. A host printing apparatus according to claim 1, wherein the
retrieved host print page count is utilized to determine whether maintenance or management of said printer device is needed.

13. A host printing apparatus according to claim 1, wherein the
retrieved host print page count is utilized in cost of ownership analysis.

14. A host printing apparatus according to claim 1, wherein the
retrieved host print page count is utilized in accounting or charging for the print job.

15. A host printing apparatus according to claim 1, wherein said
host count filter retrieves host print page count information corresponding to one or more control parameters.

16. A host printing apparatus according to claim 1, wherein said
host count filter maintains a color page count of color print pages printed by the printer device based on color print jobs from the host terminal over said predetermined period of time, and if said print job communication from said sending host terminal is for a color print job, determining whether a sum of said color page count and a number of pages to be printed based on said color print job reaches or exceeds a color print threshold.

17. A host printing apparatus according to claim 1, wherein the said
host count filter maintains a count of pages of a predetermined paper type and size printed by the printer device based on said print jobs from the host terminal over said predetermined period of time, and if said print job communication from said sending host terminal includes printing of additional pages of said predetermined paper type and size, determining whether a sum of said count of pages of said predetermined paper type and size already printed by the printer device and a number of said additional pages of said predetermined paper type and size to be printed based on said print job communication reaches or exceeds a threshold value.

18. A host printing apparatus according to claim 1, further
comprising a hardware page counter and a software page counter, wherein each of said hardware page counter and said software page counter keeps a count of pages of the print job printed on said printer device, and said host count filter compares the count kept by said hardware page counter and the count kept by said software page counter to determine the number of pages printed based on the print job communication from the sending host terminal.

19. A host printing apparatus according to claim 1, further
comprising a print engine configured to print a print job based on said print job communication received from said sending host terminal.

20. A host printing apparatus according to claim 1, wherein said
apparatus including said network communication interface, printer device and host count filter is provided within a single integral printer.

21. A host printing apparatus according to claim 1, wherein the said
host count filter utilizes said network address information in said print job communication from said sending host terminal to retrieve a corresponding host name from a name resolution service.

22. A program storage device readable by a computer and tangibly embodying a program of instructions executable by the computer which computer program includes a print job communication part (12A) configured to communicate with a plurality of host terminals through a network (13), receive a print job communication from a sending host terminal, and extract network address information of said sending host terminal from said print job communication, said computer program being **characterized by** comprising:
a host count filter part configured to maintain for each of the plurality of host terminals a host print page count of pages printed by the print engine based on print jobs from the host terminal over a predetermined period of time, and utilize the network address information extracted from said print job communication from said sending host terminal to retrieve the host print page count of pages printed by the sending host terminal over said predetermined period of time.

23. A host printing system including a plurality of host terminals, and a printer device (12) coupled to the host terminals through a network (13) which printer device includes a network communication interface (12A) configured for communications with said plurality of host terminals through said network and a print engine configured to print a print job based on a print job communication received through said network communication interface from a sending host terminal, said host printing system being **characterized in that** the printer device (12) comprises:
a host count filter configured to maintain for each of the plurality of host terminals a host print page count of pages printed by the print engine based on print jobs from the host terminal over a predetermined period of time, and utilize network address information in said print job communication from said sending host terminal to retrieve the host print page count of pages printed by the print engine based on the print jobs from the sending host terminal over said predetermined period of time.

24. A method for host printing on a network printer, the method being **characterized by** comprising:
(a) maintaining for each of a plurality of host terminals a host print page count of pages printed by the network printer based on print jobs from the host terminal over a predetermined period of time (S81) ;
(b) receiving a print job communication from a sending host terminal (S83); and
(c) utilizing network address information in the print job communication from said sending host terminal to retrieve said host print page count maintained in (a) for print jobs from the sending host terminal over said predetermined period of time (S85).
